# EUROPEAN PATENT SPECIFICATION

(11) **EP 0 411 783 B1**
(45) Date of publication and mention of the grant of the patent: **31.01.1996**
(21) Application number: 90307757.6
(22) Date of filing: 16.07.1990
(51) Int. Cl.: G11B 11/10

(54) **Magneto-optical pickup apparatus and magneto-optical recording/reproducing apparatus**
Magnetooptisches Abtast-, Aufzeichnungs- und Wiedergabegerät
Appareil lecteur et d'enregistrement/reproduction magnéto-optique

(30) Priority: 29.07.1989 JP 197349/89; 30.01.1990 JP 19989/90
(43) Date of publication of application: 06.02.1991
(73) Proprietor: SONY CORPORATION, Tokyo (JP)
(72) Inventor: Iwabuchi, Kietsu, Shinagawa-ku, Tokyo (JP); Sasaki, Koji, Shinagawa-ku, Tokyo (JP); Watanabe, Tetsu, Shinagawa-ku, Tokyo (JP); Yamagami, Tamotsu, Shinagawa-ku, Tokyo (JP); Aoki, Yoshio, Shinagawa-ku, Tokyo (JP)
(74) Representative: Ayers, Martyn Lewis Stanley

(56) References cited:
- JP-A- 2 158 942
- PATENT ABSTRACTS OF JAPAN, vol. 10, no. 76 (P-440)(2133) 26 March 1986;& JP-A-60214438
- PATENT ABSTRACTS OF JAPAN, vol. 13, no. 9 (P-811)(3357) 11 January 1989;& JP-A-63217547
- PATENT ABSTRACTS OF JAPAN, vol. 9, no. 156 (P-368)(1879) 29 July 1985;& JP-A-60029904

## Description

The present invention relates to a magneto-optical pickup apparatus for recording an information signal on and/or reproducing such a signal from a magneto-optical recording medium by utilising a magneto-optical effect such as a magnetic Kerr effect or a Faraday effect and to a magneto-optical recording and/or reproducing apparatus using such pickup apparatus same.

Recently, in both light and magnetic field methods of modulation are known in the recording of a signal onto a magneto-optical recording medium. The magnetic field modulation method has the advantage that it can achieve an overwrite operation.

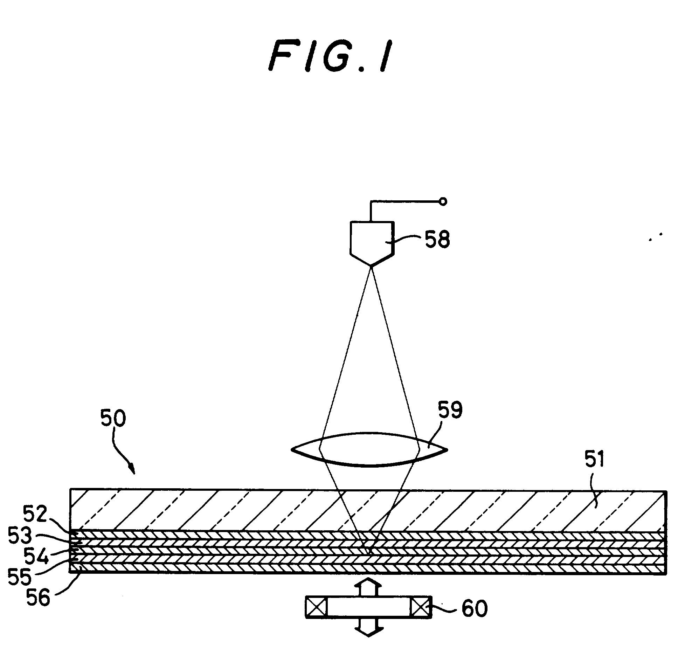

Figure 1 of the accompanying drawings shows a conventional magneto-optical pickup apparatus using the magnetic field modulation method.

When a single-sided magneto-optical recording medium 50 is loaded, an optical system including a laser device 58, an objective lens 59 and the like is arranged over the upper surface side of the single-sided magneto-optical recording medium 50, and a magnetic field generator 60 is arranged under the lower surface of the recording medium 50.

A driving system (not shown) is arranged to drive the optical system in focusing and tracking directions with respect to the magneto-optical recording medium 50. Another driving system (also not shown) is arranged to drive the magnetic system in a direction of the arrows in figure 1 and the tracking direction.

The magnetic field modulation method requires reversal of the magnetic field to be carried out at high speed and the inductance of the field coil makes a sufficient excitation current difficult to obtain, with the result that the generated magnetic field strength is limited. To offset this effect, the magnetic field generator 60 has to be as close as practicable to the recording magnetic layer 53 (to be described later) of the single-sided magneto-optical recording medium 50.

The single-sided magneto-optical recording medium 50 is constituted by a sequentially stack of a dielectric layer 52, the recording magnetic layer 53 formed of, eg, a rare earth-transition metal alloy amorphous thin film, and having a large magneto-optical effect, a dielectric layer 54, a reflecting layer 55 and a protection cover 56, on one surface of a transparent substrate 51 formed of, eg, polycarbonate. In this case, the thickness of the transparent substrate 51 is uniform, eg, 1.2 mm.

The single-sided magneto-optical recording medium 50 is placed on a rotary disc (not shown), and a magnetic field is applied by energisation of the magnetic field generator 60 to the recording magnetic layer 53 of the recording medium 50. The magnetic field to be applied is reverse-controlled at high speed, and a laser beam emitted from the laser device 58 is focused on the are of the recording magnetic layer 53 which is subject to the magnetic field, so that a region of the recording magnetic layer 53 where the laser beam is focused can be magnetised, so that an information signal can be overwritten in real time.

Along with an increase in information storage capacity in recent years, a double-sided magneto-optical recording medium which can record information signals on both surfaces of the disc has been developed.

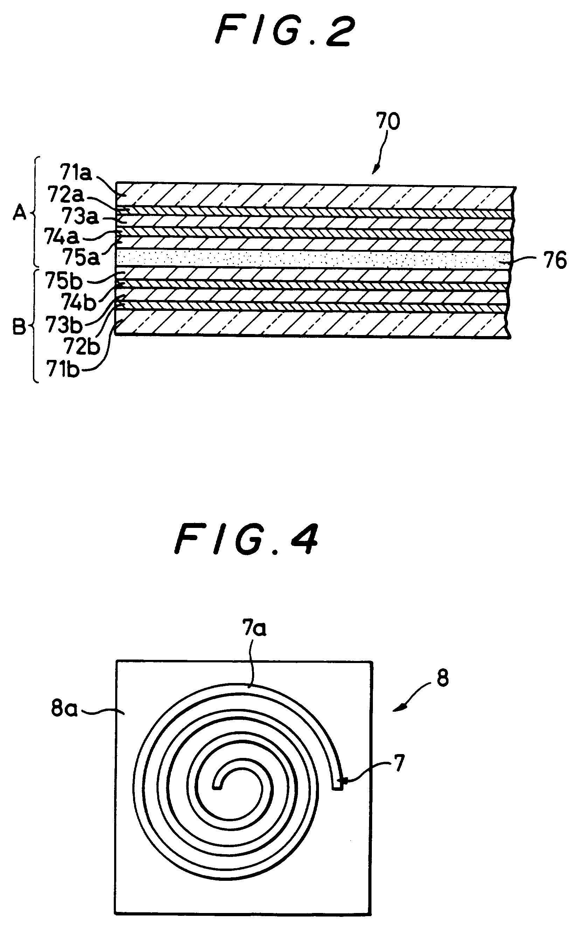

A conventional double-sided magneto-optical recording medium 70 as shown in figure 2 is constituted by bonding a magneto-optical recording medium A obtained by sequentially stacking a transparent substrate 71a, a dielectric layer 72a, a recording magnetic layer 73a, a dielectric layer 74a and a reflecting layer 75a, and a magneto-optical recording medium B obtained by sequentially stacking a transparent substrate 71b, a dielectric layer 72b, a recording magnetic layer 73b, a dielectric layer 74b and a reflecting layer 75b by means of an adhesive 76. In this double-sided magneto-optical recording medium 70, the thickness of the transparent substrates 71a and 71b has to be several mm to assure sufficient mechanical strength. Since the recording medium 70 is constituted by stacking the transparent substrates 71a and 71b, the recording magnetic layer 73a and 73b and the like, the medium 70 is significantly thicker then the single-sided magneto-optical recording medium 50.

Attempting to use the conventional magneto-optical pickup apparatus of the magnetic field modulation type shown in figure 1 uses the double-sided magneto-optical recording medium 70 poses the following problem. Since the optical system is arranged above the upper surface of the double-sided magneto-optical recording medium 70 and the magnetic system is arranged below it, during recording onto the upper magneto-optical recording medium A while the laser beam can be focused on the recording magnetic layer 73a from the upper surface side, but a magnetic field of sufficient intensity cannot be applied from the magnetic field generator 60 below the disc because of the thickness of the disc. In the magnetic field modulation type magnetic field generator, a high-frequency current responding to a high-frequency data signal must be caused to flow through its electromagnetic coil, but the inductance of the coil opposes this so that the generated magnetic field is limited. In addition, the distance between the magnetic field generator 60 and the recording magnetic layer 73a is large. For this reason, it is very difficult to achieve double-sided magneto-optical recording of a magnetic field modulation method by the conventional technique.

It is an object of the present invention to provide a magneto-optical pickup apparatus, which can perform recording/reproduction for a magneto-optical recording medium with a simple arrangement, and in which the optical system and the magnetic system can be arranged to the same side of the medium.

JP-A-60214438, on which the precharacterising portion of appended claim 1 is based, discloses a magneto-optical apparatus having a housing with a magnetic coil on a flexible board bonded to the upper face of the housing and having an objective lens located in a central aperture of the flexible board. However, the coil is spaced radially from the optical focal point and therefore requires undesirable additional power.

According to the present invention there is provided a magneto-optical pickup apparatus comprising:
a magneto-optical pickup apparatus comprising:
laser beam focusing means comprising an objective lens for focusing a laser beam emitted from laser beam emission means onto a magneto-optical recording medium; and
magnetic field generating means arranged adjacent to said laser beam focusing means and comprising a coil pattern formed so as to be coaxial with said laser beam focusing means for generating a magnetic field to be applied to said magneto-optical recording medium; characterised in that
said magnetic field generating means further comprises a light transmissive plate through which the laser beam can pass arranged to extend between said objective lens and said magneto-optical recording medium so as to intersect the axial projection of the objective lens area onto the magneto-optical recording medium, said coil pattern being formed on a surface of said plate opposite to said magneto optical recording medium.

According to the present invention, there is provided a magneto-optical recording/reproducing apparatus arranged for recording/reproducing a magneto-optical recording medium which is constituted by stacked recording layers and transparent protection plates on two surfaces of a substrate and/or a magneto-optical recording medium which is constituted by stacked high-permeability layers, recording layers and transparent protection plates on two surfaces of a substrate, the apparatus comprising two of the above magneto-optical apparatuses.

It will be apparent that because the magnetic and optical system do not have to be located below and above the disc, the invention allows individual pickups to be provided for the two recording layers of a double sided disc.

In the magneto-optical pickup apparatus described above, a magnetic field to be applied to a magneto-optical recording medium is generated from a plate on which a coil pattern is formed, and this plate can allow light to pass therethrough. Thus, the plate can be arranged adjacent to the laser beam focusing means, and the optical system and the magnetic system can be arranged to the same side of the magneto-optical recording medium. Since the distance between the coil pattern and the magneto-optical recording medium can be shortened, the magnetic field from the coil pattern can be applied to the magneto-optical recording medium from a position closer to the medium, which alleviates the problem noted above regarding the coil drive current.

The invention will be further described by way of non-limitative example with reference to the accompanying drawings, in which:-
Figure 1 is a sectional view showing an arrangement of a conventional magneto-optical pickup apparatus;
Figure 2 is a sectional view showing a structure of a conventional double-sided magneto-optical recording medium;
Figure 3 is a sectional view showing an arrangement of a magneto-optical pickup apparatus according to the embodiment 1 of the present invention;
Figure 4 is a front view of an optical glass formed with a coil pattern, which can be used in the magneto-optical pickup apparatus shown in figure 3;
Figure 5 is a sectional view showing an arrangement of a magneto-optical pickup apparatus according to a second embodiment of the present invention;
Figure 6 is a sectional view showing an arrangement of a magneto-optical pickup apparatus according to a third embodiment of the present invention; and
Figure 7 is a sectional view showing an arrangement of a magneto-optical pickup apparatus according to a fourth embodiment of the present invention.

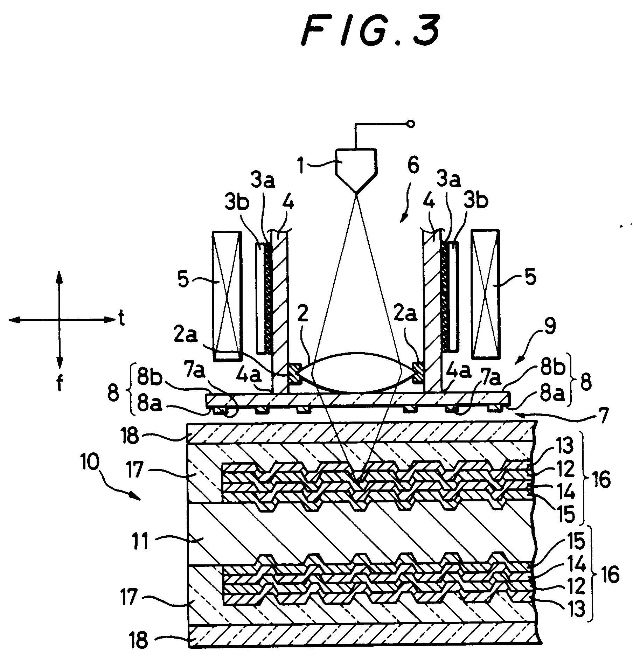

Embodiments of the present invention will be described below with reference to figures 3 to 7.

Figure 3 is a sectional view of a magneto-optical pickup apparatus according to the embodiment 1 of the present invention.

The magneto-optical pickup apparatus shown in figure 3 comprises a pickup 6 as an optical system including a laser device 1, an objective lens 2, a coil bobbin 4 around which a focusing coil 3a and a tracking coil 3b are wound and a magnet 5 arranged around the coil bobbin 4, and a magnetic field generator 9 as a magnetic system.

The coil bobbin 4 of the pickup 6 has, eg, a cylindrical shape, and the focusing coil 3a for driving the pickup 6 in a direction f in figure 3 and the tracking coil 3b for driving the pickup 6 in a direction t in figure 3 are arranged around the bobbin 4. A lens support member 2a is arranged at a position close to an end portion 4a of the coil bobbin 4. The member 2a supports the objective lens 2 for focusing a laser beam emitted from the laser device 1.

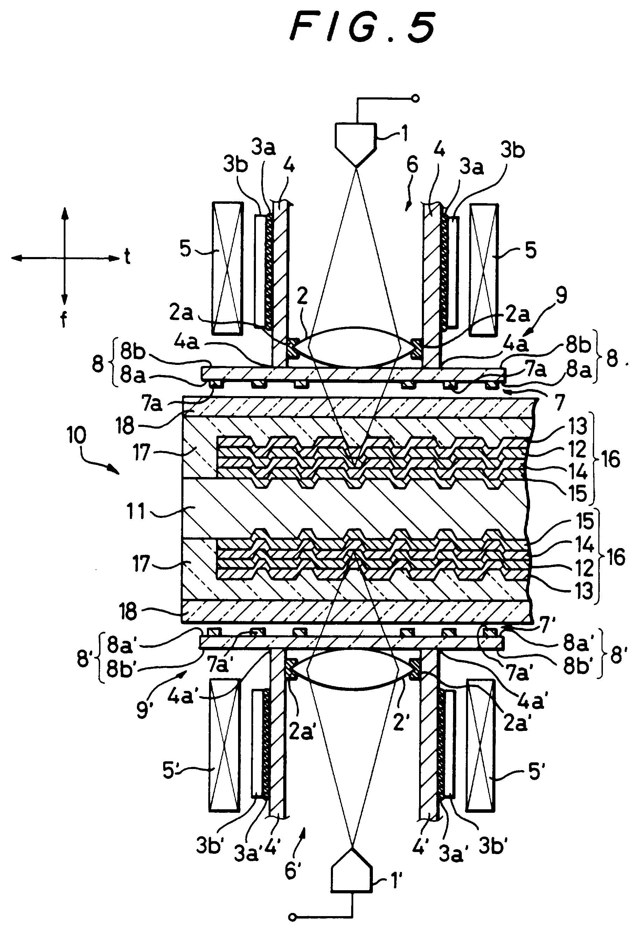

The magnetic field generator 9 is constituted as follows. That is, as shown in figure 4, a conductor 7a through which a current of a high-frequency signal is caused to flow to generate a magnetic field is formed, as a spiral coil pattern 7, on a surface 8a (a lower surface in figure 3) of an optical glass 8 of, eg, silica glass having light transmission characteristics. The end portion 4a of the coil bobbin 4 is adhered and fixed to a surface 8b (an upper surface on which no coil pattern 7 is formed in figure 3) of the optical glass 8 so that the centre of the coil pattern 7 is aligned to coincide with the centre of the objective lens 2. Thus, since the laser beam can be focused on the centre of the generated magnetic field, centring adjustment in assembly of the pickup can be omitted.

The optical glass 8 is not limited to silica glass as long as it has adequate light transmission characteristics. The coil pattern 7 may comprise, eg, a printed coil, a thin film coil and the like.

A first double-sided magneto-optical recording medium 10 shown in figure 3 is described in the specification and drawings of Japanese patent application number 14256/1989 previously filed by the present applicant in Japan. In this medium, recording sections 16, photo-curing resin layers 17 and transparent protection plates 18 are respectively arranged on two surfaces of a common substrate 11.

In each recording section 16, a reflecting layer 15 is arranged to be closer to the substrate 11 than a recording magnetic layer 12. The reflecting layer 15, a second dielectric layer 14, the recording magnetic layer 12, and a first dielectric layer 13 are stacked from the substrate 11 side.

Since the double-sided magneto-optical recording medium 10 has the common substrate 11, its thickness can be nearly half that of a double-sided magneto-optical recording medium 50 formed by adhering two substrates.

In the magneto-optical pickup apparatus with the above arrangement, when a focusing drive current is supplied to the focusing coil 3a, the coil bobbin 4 and the magnetic field generator 9 arranged in the coil bobbin 4 are shifted in a focusing direction as an optical axis direction of the objective lens 2 indicated by an arrow f in figure 3. When a tracking drive current is supplied to the tracking coil 3b, the coil bobbin 4 and the magnetic field generator 9 are shifted in a tracking direction as a direction perpendicular to the optical axis of the objective lens 2, as indicated by an arrow t in figure 3.

At the same time, a high-frequency current signal obtained by amplifying a signal to be recorded is supplied to the coil pattern 7, formed of the conductor 7a, of the magnetic field generator 9, thereby generating a magnetic field. The magnetic field is reverse-controlled at high speed in response to the signal to be recorded, and is applied to the recording magnetic layer 12 of the double-sided magneto-optical recording medium 10. A laser beam emitted from the laser device 1 is focused on a region of the recording magnetic layer 12, where the magnetic field is applied, through the objective lens 2 and the optical glass 8 to increase the local temperature of the recording magnetic layer 12 beyond its Curie temperature, thus recording an information signal.

As can be seen from the above description, in a magneto-optical pickup apparatus of this embodiment, the optical system as the pickup 6 comprising the laser device 1, the objective lens 2 and the like, and the magnetic system as the magnetic field generator constituted by forming the coil pattern 7 on the optical glass 8 are arranged on the same side of the double-sided magneto-optical recording medium 10, so that the distance between the coil pattern and the magneto-optical recording medium 10 can be shortened. For example, as will be described in the second and third embodiments, recording and reproduction on the double-sided magneto-optical recording medium by the magnetic field modulation method, which are very difficult to achieve by the conventional method, can be realised.

The coil bobbin 4 of the pickup 6 and the magnetic field generator 9 are fixed by, eg, bonding, so that the centre of the objective lens 2 can be easily aligned with the centre of the magnetic field of the magnetic field generator 9. In addition, since the pickup 6 and the magnetic field generator 9 can be moved in tandem with each other by the focusing servo, the strength of the magnetic field to be applied to the double-sided magneto-optical recording medium can be kept constant. Therefore, the driving system for the magnetic system which is required in the conventional apparatus can be omitted. Since the magneto-optical pickup apparatus has reduced space requirements, the degree of freedom in design of the apparatus can be increased.

Note that reproduction for the double-sided magneto-optical recording medium 10 can be realised by using the laser device 1 and a light detection means (not shown) which includes a deflection beam splitter (not shown) arranged between the laser device 1 and the objective lens 2.

A second embodiment of the invention is shown in figure 5, in which a second magneto-optical pickup apparatus is arranged below the double-sided magneto-optical recording medium 10 of figure 3. Thus, this embodiment comprises first and second magneto-optical pickup apparatus to the upper and lower sides of the disc.

In this case, the first and second magneto-optical pickup apparatus disposed to opposite sides of the medium 10 may each be constituted as described in the first embodiment. Numerals and suffixed letters of constituting elements 1' to 9' of the second magneto-optical pickup apparatus shown in figure 5 correspond to those denoted by reference numerals 1 to 9 in figures 3 and 4, and a detailed description thereof will be omitted.

The first and second magneto-optical pickup apparatus are operated in the same manner as that in the embodiment 1. The first and second pickup apparatus are synchronously driven in the directions f and t, respectively.

According to the second embodiment, simultaneous recording and reproduction of the double-sided magneto-optical recording medium can be performed. For example, when the laser devices 1 and 1' and the magnetic field generators 9 and 9' are used at the same time, simultaneous recording on the upper and lower surfaces of the double-sided magneto-optical recording medium 10 can be performed. When the laser devices 1 and 1' are used at the same time, simultaneous reproduction can be performed. Thus, the capacity of the medium can be increased, and recording and reproduction of an information signal can be realised at higher speed.

In addition, recording or reproduction is performed on one surface of the double-sided magneto-optical recording medium 10, and then, recording or reproduction can be performed on the other surface. Thus, recording and reproduction of a capacity twice that of a single-sided magneto-optical recording medium are allowed.

In the above mentioned case, when recording is performed on one surface, the two magnetic field generators 9 and 9' can be used at the same time, while the magnetic field generator 9 or 9' arranged on the other surface side is generating a magnetic field. Therefore, since the magnetic fields can be applied from two surface sides to one magnetic recording layer 12, recording can be performed at a higher magnetic field strength.

When recording is performed on one surface, recording can be performed using the magnetic field generator arranged on the other surface side.

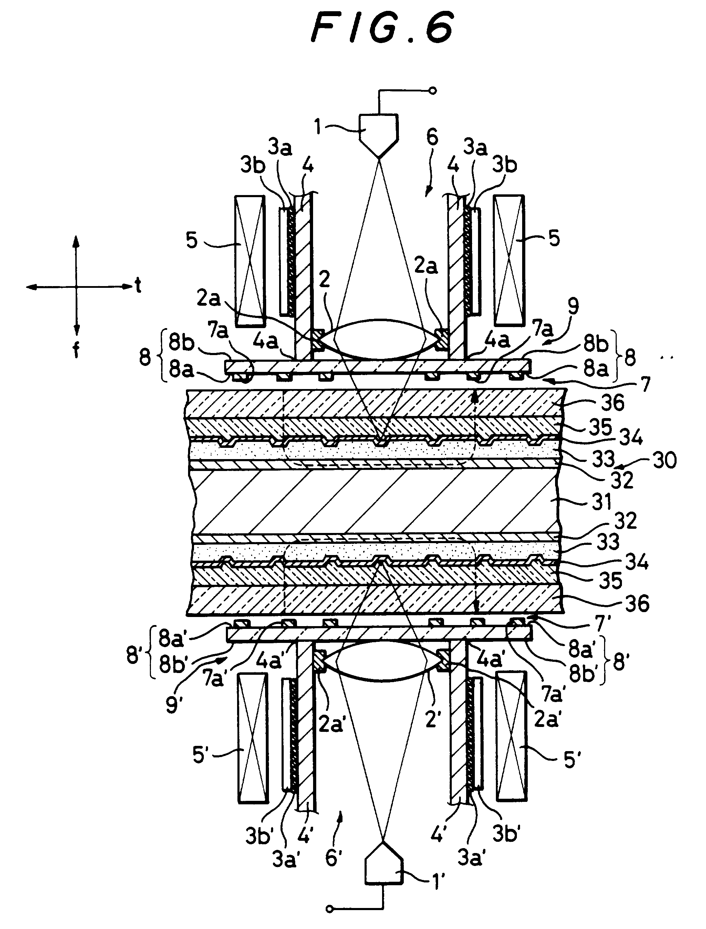

A third embodiment will be described below. As shown in figure 6, this embodiment employs the same magneto-optical pickup apparatuses as in figure 5, and can use a second form of double-sided magneto-optical recording medium 30 to perform recording and reproduction.

The second form double-sided magneto-optical recording medium 30 has been proposed in the specification and drawings of Japanese patent application number 274734/1989 by one of the present inventors and others. In this medium, high-permeability layer 32, photo-curing resin layers 33, magneto-optical recording layers 34, adhesive layers 35, and transparent protection plates 36 are sequentially stacked on the two surfaces of a common substrate 31, respectively. Each high-permeability layer 32 is formed of a material having a high magnetic permeability, such as a transition metal (eg, Fe, Co, Ni or the like), a permalloy as their alloy, sendust or an amorphous magnetic alloy. The layer 32 can improve a perpendicular magnetic field efficiency in a direction perpendicular to the surface of the double-sided magneto-optical recording medium 30.

In the third embodiment, since the second double-sided magneto-optical recording medium 30 comprises the high-permeability layer 32, magnetic fluxes from magnetic field generators 9 and 9' form magnetic closed loops, as indicated by broken lines in figure 6. Therefore, magnetic fluxes applied to the double-sided magneto-optical recording medium 30 can be effectively focused in a recording mode, so that the perpendicular magnetic field efficiency of the medium 30 is improved.

In the third embodiment, since recording or reproduction can be simultaneously executed on the two surfaces of the double-sided magneto-optical recording medium, or after recording or reproduction is performed on one surface, recording or reproduction can then be performed on the other surface.

In the magnetic field generator 9 or 9' in each of the embodiments 1 to 3 of the magneto-optical pickup apparatus, the coil pattern 7 or 7' is formed on the optical glass 8 or 8' as a plate having light transmission characteristics. Alternatively, in order to prevent reflection, a plate in which a hole for allowing a laser beam to pass therethrough is formed to provide light transmission characteristics may be used.

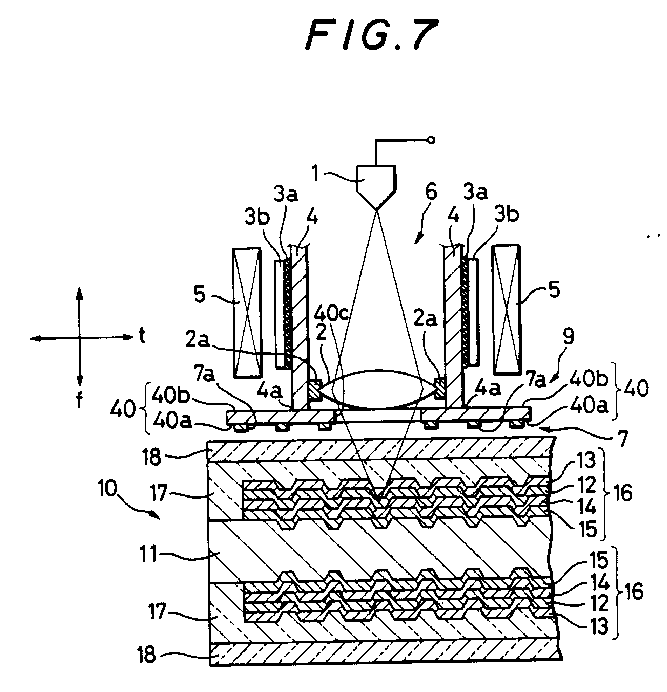

In the above three embodiments, the magnetic field generator 9 is constituted by forming, as the spiral coil pattern 7, the conductor 7a through which a current of a high-frequency signal is caused to flow to generate a magnetic field on the surface 8a of the optical glass 8 having suitable light transmission characteristics. However, the plate on which the coil pattern 7 is formed need not always be an optical glass but may comprise a non-light transmissive material, eg, a metal plate, as will be described in the fourth embodiment described below with reference to figure 7. The same reference numerals in this embodiment denote the same parts as in the embodiments 1 to 3, and a detailed description thereof will be omitted.

A magnetic field generator 9 of the embodiment 4 is constituted by forming, as a spiral coil pattern 7, a conductor 7a for generating a magnetic field upon reception of a high-frequency signal on a surface 40a of a planar member 40 which is obtained by forming a soft magnetic material such as ferrite into a planar shape. In addition, an opening 40c having a diameter large enough to allow the ray bundle of the laser beam focused by an objective lens 2 to pass therethrough is formed at the central portion of the planar member 40. An end portion 4a of a coil bobbin 4 is adhered and fixed to a surface 40b (which has no coil pattern 7) of the planar member 40 so that the centre of the coil pattern 7 is aligned to coincide with the centre of the objective lens 2 and to coincide with the centre of the opening 40c of the planar member 40. Since the opening 40c is formed at the central portion of the planar member 40, a laser beam emitted from a laser device 1 can be focused on the centre of a magnetic field generated by the coil pattern 7.

The planar member 40 may be entirely formed of a soft magnetic material such as ferrite. Alternatively, a base plate formed of a non-magnetic material may be prepared, and a thin film of a soft magnetic material such as ferrite may be formed on the base plate by sputtering or deposition. According to the embodiment 4, since the coil pattern 7 of the magnetic field generator 9 is formed on the planar member 40 formed of a soft magnetic material such as ferrite, a closed magnetic path is formed between the recording medium and the magnetic field generator 9 as in the case wherein the high-permeability member is arranged like in the embodiment 3. Therefore, since magnetic fluxes generated at the side of the objective lens 2 of the pickup can be efficiently guided toward the recording medium, the efficiency of the magnetic field generator 90 can be improved.

The fourth embodiment discloses an arrangement wherein the pickup apparatus is arranged on one surface side of the double-sided magneto-optical recording medium like as in the first embodiment. Alternatively, the pickup apparatuses may be disposed on two surface sides of the double-sided magneto-optical recording medium like in the second and third embodiments to allow simultaneous recording or reproduction on two surfaces, as a matter of course.

In the first to fourth embodiments, the magnetic field generator 9 or 9' employs a magnetic field modulation method. However, the present invention is not limited to this, and may adopt another method, eg, a light modulation method, that is, where the light beam, rather than the magnetic field, is modulated.

According to a magneto-optical pickup apparatus of the present invention, since a plate on which a coil pattern for generating a magnetic field is formed and which has light transmission characteristics is arranged near a laser beam focusing means, a distance between the coil pattern and the magneto-optical recording medium can be shortened. A simple arrangement wherein an optical system and a magnetic system are arranged on the same surface side of the magneto-optical recording medium can be realised. In addition, since a sufficient mounting space can be assured above each surface of the magneto-optical recording medium, a degree of freedom in design for the apparatus can be increased.

According to a magneto-optical recording/ reproducing apparatus of the present invention, magneto-optical pickup apparatuses each comprising an optical system and a magnetic system can be arranged on two surface sides of a double-sided magneto-optical recording medium, so that recording and reproduction of an information signal on two surfaces of the double-sided magneto-optical recording medium can be performed at the same time or from one surface to the other surface. Thus, a large number of information signals can be recorded/reproduced, and recording/ reproducing can be performed at higher speed.

## Claims

1. A magneto-optical pickup apparatus comprising:
laser beam focusing means comprising an objective lens (2,2') for focusing a laser beam emitted from laser beam emission means (1,1') onto a magneto-optical recording medium (10,30); and
magnetic field generating means (9,9') arranged adjacent to said laser beam focusing means (2,2') and comprising a coil pattern (7,7') formed so as to be coaxial with said laser beam focusing means (2,2') for generating a magnetic field to be applied to said magneto-optical recording medium (10,30); characterised in that
said magnetic field generating means (9,9') further comprises a light transmissive plate (8,8',40) through which the laser beam can pass arranged to extend between said objective lens (2,2') and said magneto-optical recording medium (10,30) so as to interesect the axial projection of the objective lens area onto the magneto-optical recording medium, said coil pattern (7,7') being formed on a surface of said plate (8,8',4c) opposite to said magneto optical recording medium (10,30).

2. A magneto-optical pickup apparatus according to claim 1, characterised in that said plate (8,8') comprises an optical glass plate.

3. A magneto-optical pickup apparatus according to claim 2 characterised in that the laser beam is focused by said laser beam focusing means (2,2') substantially on a centre of the magnetic field generated by said coil pattern (7,7').

4. A magneto-optical pickup apparatus according to claim 1 characterised in that said plate (40) comprises a non-light transmission material and has an opening (40c) through which the bundle of rays of the laser beam can pass in whole, said opening (40c) being formed at a substantially central portion of said plate (40).

5. A magneto-optical pickup apparatus according to claim 4 characterised in that the laser beam is focused by said laser beam focusing means (2) substantially on a centre of the magnetic field generated by said coil pattern (7).

6. A magneto-optical pickup apparatus according to claim 5 characterised in that at least a surface portion of said plate (40), which is opposed to said magneto-optical recording medium (10,30) comprises a soft magnetic material.

7. A magneto-optical recording/reproducing apparatus arranged for recording/reproducing a magneto-optical recording medium (10) which is constituted by stacked recording layers (12) and transparent protection plates (18) on two surfaces of a substrate (11) and/or a magneto-optical recording medium (30) which is constituted by stacked high-permeability layers (32), recording layers (34) and transparent protection plates (36) on two surfaces of a substrate (31), the apparatus comprising two magneto-optical pickup apparatuses according to any preceding claim.

8. A magneto-optical recording/reproducing apparatus according to claim 7, characterised in that said magneto-optical pickup apparatuses are arranged so as, in use, to be on two surface sides of said magneto-optical recording medium (10).

9. A magneto-optical recording/reproducing apparatus according to claim 8, characterised in that said magneto-optical pickup apparatuses arranged on the two surface sides of said magneto-optical recording medium (10) are constituted so as to be simultaneously operable to simultaneously perform recording/reproduction on the two surfaces of said magneto-optical recording medium (10).

## Patentansprüche

1. Magnetooptische Abtasteinrichtung, die umfaßt:
ein Laserstrahl-Fokussierungsmittel, das eine Objektivlinse (2,2') enthält zum Fokussieren eines Laserstrahls, der von einem Laserstrahl-Ausstrahlungsmittel (1, 1') ausgestrahlt wird, auf einem magnetooptischen Aufzeichnungsmedium (10,30) und
ein Magnetfeld-Erzeugungsmittel (9,9'), welches an das Laserstrahl-Fokussierungsmittel (2,2') grenzend angeordnet ist und eine Spulenanordnung (7,7') umfaßt, die derart ausgebildet ist, daß sie koaxial mit dem Laserstrahl-Fokussierungsmittel (2,2') angeordnet ist, zum Erzeugen eines Magnetfelds, das auf das magnetooptische Aufzeichnungsmedium (10,30) einwirken kann,
dadurch **gekennzeichnet** , daß
das Magnetfeld-Erzeugungsmittel (9,9') ferner eine Lichtübertragungs-Platte (8,8',40) enthält, durch welche der Laserstrahl verlaufen kann, um derart zwischen der Objektivlinse (2,2') und dem magnetooptischen Aufzeichnungsmedium (10,30) weiterzuverlaufen, daß er die axiale Projektion der Objektivlinsenfläche auf das magnetooptische Aufzeichnungsmedium durchschneidet, wobei die Spulenanordnung (7,7') auf einer Oberfläche der Platte (8,8',40) ausgebildet ist, welche dem magnetooptischen Aufzeichnungsmedium (10,30) gegenüberliegt .

2. Magnetooptische Abtasteinrichtung nach Anspruch 1, dadurch **gekennzeichnet** , daß die Platte (8,8') aus einer optischen Glasplatte besteht.

3. Magnetooptische Abtasteinrichtung nach Anspruch 2 dadurch **gekennzeichnet** , daß der Laserstrahl durch das Laserstrahl-Fokussierungsmittel (2,2') im wesentlichen in einem Zentrum des mittels der Spulenanordnung (7,7') erzeugten Magnetfelds fokussiert wird.

4. Magnetooptische Abtasteinrichtung nach Anspruch 1 dadurch **gekennzeichnet** , daß die Platte (40) aus einem lichtundurchlässigen Material besteht und eine Öffnung (40c) hat, durch welche das Strahlenbündel des Laserstrahls in seiner Gesamtheit verlaufen kann, welche Öffnung (40c) im wesentlichen bei einem zentralen Teil der Platte (40) ausgebildet ist.

5. Magnetooptische Abtasteinrichtung nach Anspruch 4 dadurch **gekennzeichnet** , daß der Laserstrahl durch das Laserstrahl-Fokussierungsmittel (2) im wesentlichen in einem Zentrum des mittels der Spulenanordnung (7) erzeugten Magnetfelds fokussiert wird.

6. Magnetooptische Abtasteinrichtung nach Anspruch 5 dadurch **gekennzeichnet**, daß zumindest ein Teil der Oberfläche der Platte (40), welche dem magnetooptischen Aufzeichnungsmedium (10,30) gegenüberliegt, aus einem weichmagnetischen Material besteht.

7. Magnetooptisches Aufzeichnungs-/Wiedergabegerät, das eingerichtet ist für ein Aufzeichnen auf und ein Wiedergeben von einem magnetooptischen Aufzeichnungsmedium (10), welches durch übereinandergeschichtete Aufzeichnungslagen (12) and lichtdurchlässige Platten (18) auf zwei Oberflächen eines Substrats (11) gebildet ist, und/oder einem magnetooptischen Aufzeichnungsmedium (30), welches durch übereinandergeschichtete Lagen (32) aus hochpermeablem Material, Aufzeichnungslagen (34) und lichtdurchlässige Schutzplatten (36) auf zwei Oberflächen eines Substrats (31) gebildet ist, welches Gerät zwei magnetooptische Abtasteinrichtungen nach einem der vorhergehenden Ansprüche enthält.

8. Magnetooptisches Aufzeichnungs-/Wiedergabegerät nach Anspruch 7, dadurch **gekennzeichnet** , daß die magnetooptischen Abtasteinrichtungen derart angeordnet sind, daß sie sich im Betrieb auf zwei Oberflächenseiten des magnetooptischen Aufzeichnungsmediums (10) befinden.

9. Magnetooptisches Aufzeichnungs-/Wiedergabegerät nach Anspruch 8, dadurch **gekennzeichnet** , daß die magnetooptischen Abtasteinrichtungen, welche auf den zwei Oberflächenseiten des magnetooptischen Aufzeichnungsmediums (10) angeordnet sind, derart eingerichtet sind, daß sie gleichzeitig betreibbar sind, um gleichzeitig ein Aufzeichnen/Wiedergeben auf den zwei Oberflächen des magnetooptischen Aufzeichnungsmediums (10) durchzuführen.

## Revendications

1. Un Dispositif de captation magnéto-optique comprenant :
des moyens de focalisation de faisceau de laser, comprenant une lentille (2, 2') d'objectif, pour focaliser un faisceau de laser, émis à partir de moyens (1, 1') d'émission de faisceau de laser, sur un support d'enregistrement (10, 30) magnéto-optique ; et
des moyens (9, 9') de génération de champ magnétique, agencés adjacents auxdits moyens (2, 2') de focalisation de faisceau de laser et comprenant un motif (7, 7') de bobine, formé de façon à être coaxial avec lesdits moyens (2, 2') de focalisation de faisceau de laser, pour générer un champ magnétique devant être appliqué audit support d'enregistrement (10, 30) magnéto-optique ; caractérisé en ce que
lesdits moyens (9, 9') de génération de champ magnétique comprennent de plus une plaque (8, 8', 40) transmettant la lumière, à travers laquelle le faisceau de laser peut passer, agencée afin de s'étendre entre ladite lentille (2, 2') d'objectif et ledit support d'enregistrement (10, 30) magnéto-optique, de façon à intercepter la projection axiale de la zone de lentille d'objectif sur le support d'enregistrement magnéto-optique, ledit motif (7, 7') de bobine étant formé sur une surface de ladite plaque (8, 8', 4c) à l'opposé dudit support d'enregistrement (10, 30) magnéto-optique.

2. Un dispositif de captation magnéto-optique selon la revendication 1, caractérisé en ce que ladite plaque (8, 8') comprend une plaque de verre optique.

3. Un dispositif de captation magnéto-optique selon la revendication 2, caractérisé en ce que le faisceau de laser est focalisé par lesdits moyens (2, 2') de focalisation de faisceau de laser sensiblement sur un centre du champ magnétique généré par ledit motif (7, 7') de bobine.

4. Un dispositif de captation magnéto-optique selon la revendication 1, caractérisé en ce que ladite plaque (40) comprend un matériau ne transmettant pas la lumière et a une ouverture (40c), à travers laquelle le faisceau de rayons du faisceau de laser peut passer en totalité, ladite ouverture (40c) étant formée à une portion sensiblement centrale de ladite plaque (40).

5. Un dispositif de captation magnéto-optique selon la revendication 4, caractérisé en ce que le faisceau de laser est focalisé par lesdits moyens (2) de focalisation de faisceau de laser sensiblement sur un centre du champ magnétique généré par ledit motif (7) de bobine.

6. Un dispositif de captation magnéto-optique selon la revendication 5, caractérisé en ce qu'au moins une portion de surface de ladite plaque (40), qui est opposée audit support d'enregistrement (10, 30) magnéto-optique, comprend un matériau magnétique doux.

7. Un dispositif d'enregistrement/de reproduction magnéto-optique, agencé pour enregistrer/reproduire un support d'enregistrement (10) magnéto-optique, qui est constitué par des couches (12) d'enregistrement empilées et des plaques (18) de protection transparentes sur deux surfaces d'un substrat (11), et/ou un support d'enregistrement (30) magnéto-optique, qui est constitué par des couches (32) à perméabilité élevée empilées, des couches (34) d'enregistrement et des plaques (36) de protection transparentes sur deux surfaces d'un substrat (31), le dispositif comprenant deux dispositifs de captation magnéto-optiques selon une quelconque précédente revendication.

8. Un dispositif d'enregistrement/de reproduction magnéto-optique selon la revendication 7, caractérisé en ce que lesdits dispositifs de captation magnéto-optiques sont agencés de façon, en utilisation, à être sur deux côtés de surface dudit support d'enregistrement (10) magnéto-optique.

9. Un dispositif d'enregistrement/de reproduction magnéto-optique selon la revendication 8, caractérisé en ce que lesdits dispositifs de captation magnéto-optiques, agencés sur les deux côtés de surface dudit support d'enregistrement (10) magnéto-optique, sont constitués de façon à être simultanément exploitables, afin d'effectuer simultanément un enregistrement/une reproduction sur les deux surfaces dudit support d'enregistrement (10) magnéto-optique.
